# EUROPÄISCHE PATENTSCHRIFT

(11) **EP 3 266 940 B1**
(45) Veröffentlichungstag und Bekanntmachung des Hinweises auf die Patenterteilung: **30.09.2020**
(21) Anmeldenummer: 17161992.7
(22) Anmeldetag: 21.03.2017
(51) Int. Cl.: E02F 3/36, A01B 59/06

(54) **SCHNELLKUPPLER**
QUICK COUPLER
RACCORD RAPIDE

(30) Priorität: 05.07.2016 DE 202016004202 U
(43) Veröffentlichungstag der Anmeldung: 10.01.2018
(73) Patentinhaber: Kinshofer GmbH, 83666 Waakirchen (DE)
(72) Erfinder: FRIEDRICH, Thomas, 83727 Schliersee (DE)
(74) Vertreter: Thoma, Michael

(56) Entgegenhaltungen:
- EP-A2- 1 852 555
- WO-A1-2014/098618
- DE-U1-202014 001 328
- JP-A- H11 193 545
- JP-A- 2010 133 142
- US-A- 5 049 027
- US-A1- 2015 330 053

## Beschreibung

Die vorliegende Erfindung betrifft einen Schnellkuppler zum Ankuppeln eines Werkzeugs wie beispielsweise Baggerlöffel, Schalengreifer oder Abbruchzangen an einen Werkzeugführer wie Baggerstiel oder dergleichen, mit einer Ankuppelaufnahme zum Aufnehmen eines ersten Verriegelungsteils und einer Verriegelungsaufnahme zum Aufnehmen eines zweiten Verriegelungsteils, wobei zumindest der Verriegelungsaufnahme ein Verriegelungselement zum Verriegeln des zweiten Verriegelungsteils in der Verriegelungsaufnahme zugeordnet ist, wobei das genannte Verriegelungselement durch einen Stellaktor betätigbar ist.

An Baumaschinen wie beispielsweise Hydraulikbaggern oder Gelenkgreifern wie beispielsweise Holzhandhabungsmaschinen oder Abbruchgeräten oder ähnlichen Materialumschlagmaschinen werden häufig Schnellkuppler zum Ankuppeln verschiedener Werkzeuge wie beispielsweise Räumlöffel, Schalengreifer oder Abbruchzangen an einen Baggerstiel oder ähnliche Werkzeugführer wie Knickarmauslegern verwendet, um verschiedene Werkzeuge ohne lange Umrüstzeiten verwenden zu können.

Solche Schnellkuppler zeigen beispielsweise die Schriften JP 2010-133142 A, JP H11 193545 A und US 2015/330053 A1, wobei die beiden erstgenannten japanischen Schriften vorschlagen, die Schnellkuppler mittels eines Hydraulikzylinders zu betätigen, der von einer elektrisch antreibbaren Pumpe gespeist wird, die am Schnellkuppler angebracht ist.

Derartige Schnellkuppler können als Verriegelungselemente insbesondere zwei voneinander beabstandete Verriegelungsachsen an einem Kupplungsteil aufweisen, während der andere Kupplungsteil, insbesondere der baggerstielseitige Kupplungsteil eine vorzugsweise hakenförmige Ankuppelaufnahme zum Einhaken an einer ersten der beiden Verriegelungsachsen und eine Verriegelungsaufnahme zum Verriegeln an der zweiten Verriegelungsachse aufweisen kann. Nach Einhaken der ersten Verriegelungsachse in der Ankuppelaufnahme können die beiden Kupplungsteile zueinander verschwenkt werden, wobei die in der Ankuppelaufnahme sitzende Verriegelungsachse die Drehachse bildet, so dass die zweite Verriegelungsachse in die Verriegelungsaufnahme einfährt bzw. hineingeschwenkt wird, wo die genannte zweite Verriegelungsachse dann durch ein Verriegelungselement wie beispielsweise einen ausfahrbaren Keil verriegelt werden kann, so dass es gleichzeitig auch nicht mehr möglich ist, die erste Verriegelungsachse aus der Ankuppelaufnahme herauszubewegen. Zum Verfahren des genannten Verriegelungselements ist ein fremdenergiebetätigter Stelaktor vorgesehen, der beispielsweise als Hydraulikzylinder ausgebildet sein kann und üblicherweise durch Hydraulikdruck vom Gerät her betätigbar ist.

Die genannten Verriegelungsachsen an dem einen Kupplungsteil können dabei von Verriegelungsbolzen gebildet werden, die sich am entsprechenden Kupplungsteil insbesondere parallel zueinander erstrecken können, wobei anstelle solcher Bolzen jedoch ggf. auch andere Strukturteile des Kupplungsteils wie beispielsweise vorspringende Nasen, Achsschenkel, Eingriffsstumpfe in Form von Vorsprüngen oder Ausnehmungen beispielsweise in Form von Taschen als Verriegelungsteil dienen können, die an die Ankuppelaufnahme bzw. die Verriegelungsaufnahme des anderen Kupplungsteils formangepasst sind.

Um nach dem Einhaken der genannten ersten Verriegelungsachse in die Ankuppelaufnahme zu verhindern, dass sich beim genannten Schwenkvorgang die erste Verriegelungsachse wieder aus der Ankuppelaufnahme löst, wurde schon vorgeschlagen, auch der Ankuppelaufnahme ein Sicherungselement beispielsweise in Form eines federgespannten Schnappkeils zuzuordnen, der beim Einhaken der Verriegelungsachse in die Ankuppelaufnahme die Verriegelungsachse fängt und in der Ankuppelaufnahme sichert. Beim Einfahren der Verriegelungsachse in die Ankuppelaufnahme wird der Sicherungsschnapper zurückgedrückt, bis die vollständig eingehakte Position erreicht ist, so dass der Sicherungsschnapper wieder zurückschnappen und den Ausfahrweg aus der Ankuppelaufnahme heraus blockieren kann. Um beim Abbau eines Werkzeugs nach dem Entriegeln der Verriegelungsaufnahme auch die erste Verriegelungsachse aus der Ankuppelaufnahme herausfahren bzw. aushaken zu können, kann dieses Sicherungselement durch einen weiteren Stellaktor wieder gelöst bzw. in seine freigebende Stellung verbracht werden. Dies kann druckmittelbetätigt erfolgen, beispielsweise durch einen einfach wirkenden Druckmittelzylinder, welcher das Sicherungselement entgegen seiner Federvorspannung in die verriegelnde bzw. blockierende Stellung zurück in die freigebende Stellung fahren kann. Hierdurch kann ein Absteigen des Maschinenführers bzw. ein händisches Betätigen vermieden werden.

Um die genannte Verriegelungs- und Sicherungselemente unabhängig betätigen zu können, kann mit voneinander entkoppelten, separaten Druckkreisen für die Betätigung des Verriegelungsmechanismus und der Entriegelung des Sicherungselements an der Ankuppelaufnahme gearbeitete werden, was beispielsweise die Schrift EP 1852555 A2 zeigt. Dabei werden jedoch regelmäßig drei Druckleitungen benötigt, die entlag des Baggerstiels zum Schnellkuppler geführt werden, was insbesondere bei älteren Geräten eine entsprechende, recht teure Nachrüstung erfordert.

Da in der Praxis in der Vergangenheit vielfach verkaufte und immer noch in Benutzung befindliche Schnellkuppler des genannten Typs nicht mit einem solchen zusätzlichen Sicherungselement an der Ankuppelaufnahme versehen waren/sind, wäre es wünschenswert, eine solche Zusatzsicherung an der Ankuppelaufnahme nicht nur bei Neugeräten, d.h. neuen Schnellkupplern vorzusehen, sondern auch an alten Schnellkupplern nachrüsten zu können. Die in der genannten Schrift EP 1852555 A2 gezeigte Lösung ist zwar grundsätzlich auch für die Nachrüstung schon existenter Schnellkuppler geeignet, benötigt aufgrund des separaten Druckkreises zur Betätigung des Sicherungselements der Ankuppelaufnahme jedoch drei Hydraulikanschlüsse, nämlich zwei Anschlüsse zur Betätigung des eigentlichen Verriegelungsmechanismusses und einen weiteren Druckanschluss zum Entriegeln des Sicherungselements der Ankuppelaufnahme. Vielfach sind an vorhandenen Geräten jedoch nur zwei Hydraulikdruckanschlüsse vorhanden, so dass die Nachrüstung mit einer solchen Zusatzsicherung an der Ankuppelaufnahme oft nicht möglich ist.

Um eine einfach zu betätigende Zusatzsicherung auch mit nur einem Druckmittelkreis und einer begrenzten Anzahl an Druckmittelanschlüssen zu ermöglichen, ist in der DE 20 2012 007 124 U1 vorgeschlagen, das zusätzliche Sicherungselement über ein Druckschaltventil an den Druckkreis anzubinden, welcher an sich für die Betätigung des Hauptverriegelungselements vorgesehen ist. Der Druckkreis kann hierbei durch Umgehen bzw. Bypassen eines Druckminderungsventils auf ein erhöhtes Druckniveau gefahren werden, bei dem das genannte Druckschaltventil öffnet, so dass die Zusatzsicherung entgegen ihrer Federvorspannung gelöst werden kann. In der DE 20 2014 001 328 U1 ist zudem vorgeschlagen, anstelle eines einfachwirkenden Stellzylinders einen doppeltwirkenden Zylinder als Stellaktor einzusetzen, um hierdurch die Federvorspannung des Sicherungselements zu vermeiden und durch Hydraulikdruck eine Verrriegelung auch bei Schwergängigkeit infolge von beispielsweise Verschmutzung erzwingen zu können.

Die genannten Schriften DE 20 2012 007 124 und DE 20 2014 001 328 U1 vermeiden zwar die Problematik, am Baggerstiel eine dritte Hydraulikleitung anbringen zu müssen, allerdings benötigen Sie vom Bagger bzw. Trägergerät her einen ausreichend hohen Hydraulikdruck, der vom Trägergerät nicht immer bereitgestellt wird bzw. entsprechende Eingriffe in das Hydrauliksystem des Trägergeräts erfordert. Um den geforderten Druck bereitstellen zu können, muss die Pumpe am Trägergerät ausreichend weit ausgeschwenkt sein, wozu es bisweilen der Ansteuerung einer anderen Hydraulikfunktion des Trägergeräts bedarf, insbesondere wenn der Schnellkuppler nachgerüstet wird und in der ursprünglichen Hydrauliksteuerung des Trägergeräts noch nicht berücksichtigt war. So wird beispielsweise bisweilen der Löffelzylinder ausgefahren, um ausreichend Druck für die Betätigung des Schnellkupplers und dessen Verriegelungselement zu haben.

Die genannte Thematik, dass das trägerseitige Hydrauliksystem den für den Schnellkuppler benötigten Druck bisweilen nur durch spezielle Eingriffe bereitstellt, trifft an sich nicht nur Schnellkuppler, bei denen sowohl der Ankuppelaufnahme ein Sicherungselement als auch der Verriegelungsaufnahme ein Verriegelungselement zugeordnet ist und die genannten Sicherungs- und Verriegelungselemente nacheinander zu betätigen sind, sondern gilt auch für einfachere Schnellkuppler, bei denen nur ein Verriegelungselement zu verriegeln bzw. zu entriegeln ist.

Hiervon ausgehend liegt der vorliegenden Erfindung die Aufgabe zugrunde, einen verbesserten Schnellkuppler der genannten Art zu schaffen, der Nachteile des Standes der Technik vermeidet und Letzteren in vorteilhafter Weise weiterbildet. Insbesondere soll eine einfach aufgebaute, dauerhaft sicher zu betätigende Verriegelung geschaffen werden, die keine erhöhte Anzahl an Druckmittelanschlüssen benötigt und auch sonst keine besonderen Anforderungen und Eingriffe an bzw. in das Hydrauliksystem erfordert.

Erfindungsgemäß wird die genannte Aufgabe durch einen Schnellkuppler gemäß Anspruch 1 gelöst. Bevorzugte Ausgestaltungen der Erfindung sind Gegenstand der abhängigen Ansprüche.

Es wird also vorgeschlagen, den Schnellkuppler so auszubilden, dass er unabhängig von der Hyrdaulikversorgung des Trägergeräts betätigbar ist und das genannte Verriegelungselement zum Verriegeln der Verriegelungsaufnahme und ein ggfs. vorhandenes Sicherungselement für die Ankuppelaufnahme ohne Hydraulikdruck vom Trägergerät her betätigen zu können. Erfindungsgemäß ist der Schnellkuppler elektrisch ansteuerbar ausgebildet, wobei der Schnellkuppler einen elektrischen Antrieb zum Betätigen des Stellaktors für das Verriegelungselement aufweist. Durch die elektrische Ansteuerung des Schnellkupplers und dessen Antriebssystem kann auf aufwendige hydraulische Installationen am Baggerstiel bzw. Werkzeugführer verzichtet werden und es sind auch keine Eingriffe in das Hydrauliksystem des Trägergeräts nötig,da der elektrische Antrieb des Schnellkupplers unabhängig vom Hydrauliksystem des Trägergeräts arbeitet.

Der genannte elektrische Antrieb kann vorteilhafterweise am Schnellkuppler selbst angebracht oder darin integriert sein, sodass der Schnellkuppler einschließlich seines Antriebs eine separate, eigenständige Baugruppe bildet, die als Ganzes an einen Baggerstiel oder einen ähnlichen Werkzeugführer anbringbar und davon abbaubar ist. Grundsätzlich wäre es aber auch möglich, den elektrischen Antrieb am Baggerstiel oder einem anderen in der Nähe des Schnellkupplers liegenden Bauteil anzubringen und mit dem Schnellkuppler zu verbinden. Der genannte elektrische Antrieb kann unabhängig von seiner Positionierung jedoch speziell für den Schnellkuppler vorgesehen sein, ohne andere Aufgaben übernehmen zu müssen oder andere Aggregate als den Schnellkuppler antreiben zu müssen. Der genannte elektrische Antrieb kann eine nur für den Schnellkuppler vorgesehene Baugruppe bilden und ausschließlich für das Betätigen von Schnellkupplerfunktionen vorgesehen sein.

Zur Energieversorgung des elektrischen Antriebs besitzt der Schnellkuppler vorteilhafterweise einen Stromanschluss beispielsweise in Form einer Stromkupplung, die an eine Stromkupplung am Trägergerät anschließbar ist, sodass der elektrische Antrieb des Schnellkupplers vom Trägergerät her mit elektrischer Energie versorbar ist. Grundsätzlich wäre es auch denkbar, zur Energieversorgung des Schnellkupplers eine Batterie bzw. einen Akku vorzusehen, aus dem der elektrische Antrieb gespeist werden kann. Ein solcher elektrischer Energiespeicher kann ggfs. auch zusätzlich zu dem genannten Stromanschluss bzw. der genannten Stromkupplung vorgesehen sein, um bei einem Ausfall des Stromnetzes des Trägergeräts den Schnellkuppler lösen zu können.

Der genannte elektrische Antrieb ist dabei Teil eines elektrisch/hydraulisch ausgebildeten Hybridsystems, mittels dessen der zumindest eine Stellaktor des Schnellkupplers angetrieben werden kann. Dabei umfasst der genannte elektrische Antrieb eine Pumpe, die durch einen Elektromotor angetrieben wird und Druckmittel bereitstellt, mittels dessen der Stellaktor des Verriegelungselements des Schnellkupplers betätigt werden kann. Der genannte Stellaktor ist dann als Druckmittelaktor, insbesondere Hydraulik- oder Druckluftzylinder ausgebildet, wobei jedoch auch andere Ausbildungen des Druckmittelaktors beispielsweise in Form eines Hydraulikmotors in Betracht kommen.

Mittels der elektrischen Ansteuerung des Schnellkupplers kann also unabhängig vom Hydraulikdruck des Trägergeräts am Schnellkuppler selbst Druck, insbesondere Hydraulikdruck erzeugt werden, mittels dessen dann der Stellaktor des Schnellkupplers betätigt werden kann. Durch die Druckmittelbetätigung des Stellaktors selbst kann der Schnellkuppler hinsichtlich seiner Stellaktoren an sich in bekannter Weise ausgebildet bleiben und es können insbesondere auch schon existente Schnellkuppler nachgerüstet werden. Andererseits ergibt sich durch die elektrische Energieversorgung eine Unabhängigkeit vom Hydrauliksystem des Trägergeräts und die Ansteuerung des Schnellkupplers kann einfacher erfolgen. Letztlich wird nur ein entsprechender elektrischer Schalter am Führerstand des Trägergeräts benötigt, mittels dessen die Energieversorgung des elektrischen Antriebs am Schnellkuppler ein- und ausgeschaltet werden bzw. der Antrieb elektrisch angesteuert werden kann.

Vorteilhafterweise kann am Schnellkuppler auch ein Tank vorgesehen sein, der mit der genannten Pumpe strömungsverbunden bzw. über eine Ventilanordnung strömungsverbindbar ist. Ein solcher Tank am Schnellkuppler macht das Drucksystem am Schnellkuppler gänzlich autark und unabhängig vom Drucksystem des Trägergeräts. Die genannte, elektrisch angetriebene Pumpe des Schnellkupplers kann Fluid aus dem genannten Tank ansaugen und/oder aus dem Stellaktors verdrängtes Druckfluid kann in den Tank zurückströmen, ohne das der Schnellkuppler hierfür Hydraulikanschlüsse zur Verbindung mit dem Tank des Trägergeräts benötigen würde.

Grundsätzlich ist auch eine geschlossene Ausbildung des Druckmittelsystems am Schnellkuppler ohne einen solchen Tank denkbar, insbesondere dann, wenn ein doppelt wirkender Druckmittelzylinder als Stellaktor verwendet wird, sodass die Pumpe bzw. ein entsprechender Druckerzeuger das Druckmittel lediglich zwischen den beiden Druckkammern des Druckmittelzylinders hin und her verschiebt, also Druckmittel aus der einen Druckkammer in die andere Druckkammer drückt bzw. fördert, wodurch sich eine entsprechende Stellbewegung des Druckmittelzylinders ergibt. Das Vorsehen eines Tanks vergrößert jedoch die Gestaltungsfreiheiten des Systems, insbesondere hinsichtlich des Druckmittelaktors. Beispielsweise können hierdurch auch einfach wirkende Druckmittelzylinder verwendet werden, mittels derer beispielsweise in Verbindung mit Vorspann- und/oder Federeinrichtungen selbstverriegelnde Verriegelungs- und/oder Sicherungselemente geöffnet werden können.

Der elektrische Antrieb, insbesondere dessen Pumpe und ein ggfs. vorhandener Tank können eine vormontierte Baugruppe bilden, die Befestigungsmittel zum nachträglichen Anbringen an einem Schnellkuppler aufweisen kann, um auch schon vorhandene Schnellkuppler, die bislang an das Hydrauliksystem des Trägergeräts angebunden waren, nachrüsten zu können. Der elektrische Antrieb, insbesondere dessen Pumpe und ein ggfs. vorhandener Tank können als Nachrüstbausatz ausgebildet sein, um bislang hydraulisch an das Trägergerät angebundene Schnellkuppler elektrisch ansteuern und autark, das heißt unabhängig vom Hydrauliksystem des Trägergeräts betreiben zu können.

Alternativ kann der genannte elektrische Antrieb einschließlich der genannten Pumpe jedoch auch in den Schnellkuppler integriert sein und/oder einen festen Bestandteil des Schnellkupplers bilden.

Der Schnellkuppler kann ohne Hydraulikanschlüsse auskommen. Insbesondere kann der Schnellkuppler als Energieanschluss ausschließlich einen Stromanschluss aufweisen.

Da der Schnellkuppler sowohl ein Verriegelungselelement zum Verriegeln der Verriegelungsaufnahme als auch ein Sicherungslelement zum Fangen und/oder Sichern des in die Ankuppelaufnahme einfahrbaren Verriegelungsteils besitzt, ist den beiden genannten Elementen jeweils eine eigene Pumpe zugeordnet, sodass durch elektrische Betätigung der jeweiligen Pumpe das Verriegelungselement und das Sicherungselement unabhänig voneinander betätigt werden kann. Dabei kann für das Verriegelungselement und das Sicherungslement ein gemeinsamer elektrischer Antrieb vorgesehen sein, beispielsweise dergestalt, dass eine am Schnellkuppler vorgesehene Pumpe, die elektrisch antreibbar ist, Druckmittel sowohl für das Verriegelungselement als auch für das Sicherungselement bereitstellt. Hierbei kann durch eine geeignete Ventilanordnung erreicht werden, dass das Sicherungselement und das Verriegelungselement zeitlich unabhängig voneinander bzw. nacheinander betätigt werden können.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines Schnellkupplers nach einer vorteilhaften Ausführung der Erfindung, der an einen Auslegerstiel eines Baggers angebaut ist und als Anbauwerkzeug einen Grablöffel ankuppelt,
- Fig. 2:: eine perspektivische Darstellung des Schnellkupplers aus Fig. 1 in einer abgekuppelten Stellung, in der die beiden miteinander kuppelbaren Kupplungsteile kurz vor dem Einhaken am Hakenabschnitt gezeigt sind,
- Fig. 3:: eine schematische Darstellung des elektrisch/hydraulischen Antriebsystems des Schnellkupplers aus den vorhergehenden Figuren nach einer vorteilhaften Ausführung der Erfindung.

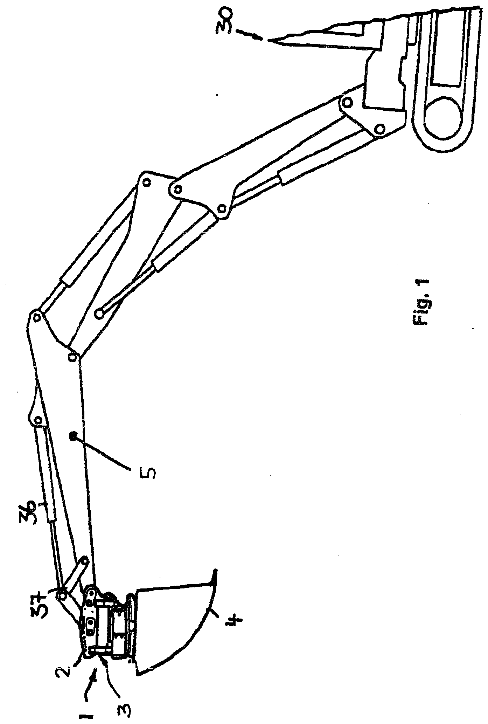

Wie Fig. 1 zeigt, kann der Schnellkuppler 1 zwischen das freie Ende des Auslegerstiels 5 eines Baggers 30 und das daran anzubauende Werkzeug 4 montiert werden, wobei das genannte Anbauwerkzeug 4 in Fig. 1 als Grablöffel ausgebildet ist, jedoch in an sich üblicher Weise natürlich auch andere entsprechende Bau-, Handhabungs- oder Abbruchwerkzeuge beispielsweise in Form von Schalengreifern, Abbruchzangen, Scheren oder Ähnliches umfassen kann. Der genannte Schnellkuppler 1 ist hierbei einerseits mittels eines stielseitigen Kupplerteils 2 schwenkbar um eine liegende, quer zur Längsachse des Auslegerstiels 5 ausgerichtete Schwenkachse an den genannten Auslegerstiel 5 montierbar, so dass der Schnellkuppler 1 zusammen mit dem daran angebauten Werkzeug 4 beispielsweise mittels eines Druckmittelzylinders 36 und eines zwischengeschalteten Schwenkstücks 37 gegenüber dem Auslegerstiel 5 verschwenkt werden kann.

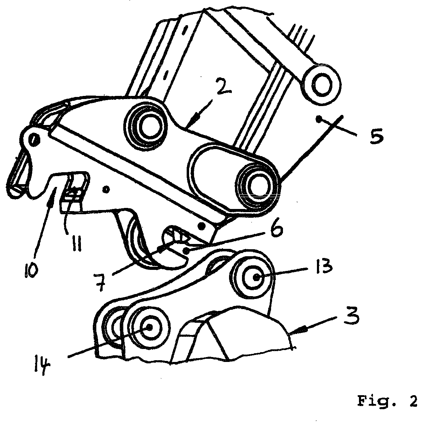

Mittels eines werkzeugseitigen Kupplerteils 3 - vgl. Fig. 2 - kann der genannte Schnellkuppler andererseits an dem Anbauwerkzeug 4 und/oder einem zwischengeschalteten Drehantrieb angebaut werden.

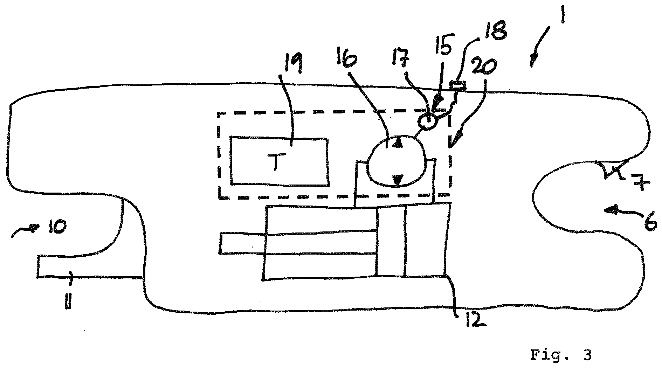

Wie die Figuren 2 und 3 zeigen, kann eines der beiden Kupplerteile 2 bzw. 3, vorzugsweise das stielseitige Kupplerteil 2 einerseits eine Ankuppelaufnahme 6 und andererseits eine Verriegelungsaufnahme 10 umfassen, die mit zwei Verriegelungsteilen beispielsweise in Form von Verriegelungsachsen 13 und 14 am anderen, vorzugsweise werkzeugseitigen Kupplerteil 3 eingehakt bzw. in Eingriff gebracht werden können. Entgegen der Darstellung der Zeichnung wäre es grundsätzlich aber auch denkbar, an einem Kupplerteil eine Verriegelungsachse und eine Aufnahme und am anderen Kupplerteil wiederum eine Verriegelungsachse und eine Aufnahme vorzusehen, wobei jedoch die gezeigte Ausführung mit zwei Aufnahmen, d.h. Verriegelungsaufnahme und Ankuppelaufnahme an dem einen Kupplerteil und zwei damit korrespondierenden Verriegelungsachsen am anderen Kupplerteil bevorzugt ist, da die zugehörigen Sicherungs- und Verriegelungselemente und deren Betätigung dann an einem Kupplerteil zusammengefasst werden können.

Wie Fig. 2 zeigt, bilden die Ankuppelaufnahme 6 und die Verriegelungsaufnahme 10 jeweils eine maulförmige, zu einer Seite hin offene Aufnahme, in die die Verriegelungsachsen 13 und 14 einfahren können, die von Querbolzen bzw. Verriegelungsbolzen gebildet sein können, vgl. Fig. 2. Dabei sind die Ankuppelaufnahme 6 und die Verriegelungsaufnahme 10 vorteilhafterweise derart angeordnet und konfiguriert, dass dann, wenn eine erste Verriegelungsachse 13 des einen Kupplerteils 3 in die vorzugsweise hakenförmige Ankuppelaufnahme 6 des anderen Kupplerteils 2 eingefahren bzw. eingehakt ist, die beiden Kupplerteile zueinander verschwenkt werden können, und zwar derart, dass die Ankuppelaufnahme 6 bzw. die darin aufgenommene Verriegelungsachse 13 die Drehachse bilden und durch die entsprechende Schwenkbewegung die zweite Verriegelungsachse 14 in die Verriegelungsaufnahme 10 einfahren kann, so dass die beiden Kupplerteile 2 und 3 in einem zweistufigen Kupplungsprozess miteinander gekuppelt werden können. Zuerst wird die Ankuppelaufnahme 6 an der ersten Verriegelungsachse 13 eingehakt, um sodann durch Verschwenken der beiden Kupplerteile 2 und 3 relativ zueinander - was beispielsweise durch Betätigung des vorgenannten Schwenkzylinders 36 erfolgen kann - die Verriegelungsaufnahme 10 mit der zweiten Verriegelungsachse 14 in Eingriff gebracht werden kann.

Ist die zweite Verriegelungsachse 14 in die Verriegelungsaufnahme 10 eingefahren, wird die genannte zweite Verriegelungsachse 14 in der Verriegelungsaufnahme 10 verriegelt bzw. wird die Verriegelungsaufnahme 10 geschlossen, so dass die zweite Verriegelungsachse 14 nicht mehr heraus kann. Hierzu ist ein Verriegelungselement 11 beispielsweise in Form eines Verriegelungskeils vorgesehen, der auf der Öffnungsseite der Verriegelungsaufnahme 10 vor die darin aufgenommene Verriegelungsachse 14 gefahren werden kann, vgl. Fig. 3. Zur Betätigung des genannten Verriegelungselements 11 ist hierbei vorteilhafterweise ein hydraulisch betätigbarer Stellaktor 12 vorgesehen, der direkt oder mittelbar mit dem genannten Verriegelungselement 11 verbunden ist und vorteilhafterweise doppelt wirkend ausgebildet ist, so dass er vor und zurück gefahren werden kann.

Durch Verriegelung des Verriegelungselements 11 ist dabei nicht nur die zweite Verriegelungsachse 14 in der Verriegelungsaufnahme 10 gehalten, sondern auch die beiden Kupplerteile 2 und 3 miteinander verriegelt, da die Ankuppelaufnahme 6 so ausgebildet ist, dass die darin aufgenommene erste Verriegelungsachse 13 nicht aus der Ankuppelaufnahme 6 heraus kann, wenn die zweite Verriegelungsachse 14 in der Verriegelungsaufnahme 10 gefangen ist.

Dennoch kann der genannten Ankuppelaufnahme 6 ein Sicherungselement 7 zugeordnet sein, mittels dessen die erste Verriegelungsachse 13 bzw. ein geeignetes Verriegelungsteil in der Ankuppelaufnahme 6 gefangen werden kann bzw. gesichert werden kann bzw. blockiert werden kann, so dass die erste Verriegelungsachse 13 nicht aus der Ankuppelaufnahme 6 ungewollt herausrutschen kann. Grundsätzlich könnte jedoch auf ein solches zusätzliches Sicherungselement auch verzichtet werden. Dieses Sicherungselement 7 dient hauptsächlich dazu, während der vorgenannten Schwenkbewegung beim Kuppelvorgang ein ungewolltes Herausrutschen der ersten Verriegelungsachse 13 aus der Ankuppelaufnahme 6 zu verhindern, solange die beiden Kupplerteile 2 und 3 noch nicht durch Schließen des genannten Verriegelungselements 11 miteinander verriegelt sind.

Das genannte Sicherungselement 7 kann ebenfalls ein keilförmiger Schieber oder auch, wie Fig. 3 oder Fig. 4 zeigt, ein schwenkbar gelagerter Verriegelungshebel sein, der in seiner verriegelnden Stellung die Öffnung der Ankuppelaufnahme 6 soweit verjüngt bzw. blockiert, dass die erste Verriegelungsachse 13 nicht herausrutschen kann.

Das genannte Sicherungselement 7 kann hierbei beispielsweise hydraulisch in die verriegelnde Stellung vorgespannt sein, um beim Einfahren der ersten Verriegelungsachse 13 in die Ankuppelaufnahme 6 vorteilhafterweise selbsttätig entgegen dem Hydraulikdruck und/oder unter Abschalten des Hydraulikdrucks zurückgedrückt zu werden. Ist die Verriegelungsachse 13 vollständig bzw. ausreichend weit in die Ankuppelaufnahme 6 eingefahren, kann das Sicherungselement 7 von der Vorspannungeinrichtung getrieben in die verriegelnde Stellung fahren, so dass die Verriegelungsachse 13 gefangen ist.

Zum Verriegeln und Lösen des Sicherungselements 7 zum Zwecke des An- und Abkuppelns ist dem genannten Sicherungselement 7 dabei ein Stellaktor 8 beispielsweise in Form eines einfach oder doppelt bzw. bidirektional wirkenden Hydraulikzylinders zugeordnet, mittels dessen das Sicherungselement 7 in seine freigebende Stellung und ggf. auch in seine verriegelnde Stellung gefahren bzw. geschwenkt werden kann.

Zum Betätigen der genannten Sicherungs- und Verriegelungselemente 7 bzw. 11 umfasst der Schnellkuppler 1 ein elektrisches Antriebssystem 20, über das der Schnellkuppler 1 elektrisch ansteuerbar ist, sodass der vom Hydraulisystem des Trägergeräts unabhängig ist. Das genannte elektrische Antriebssystem 20 umfasst dabei einen Energiewandler, der elektrische Energie in Druckmittelenergie, insbesondere hydraulische Energie wandelt, mittels derer dann die genannten Stellaktoren 8 und 12 betätigt werden können.

Konkret kann am Schnellkuppler 1 ein elektrischer Antrieb 15 vorgesehen sein, der insbesondere zumindest eine Pumpe 16 oder einen anderen Druckerzeuger aufweisen kann, die bzw. der von einem Elektromotor 17 angetrieben werden kann. Zur Ansteuerung bzw. Energieversorgung des genannten elektrischen Antriebs 15 kann am Schnellkuppler 1 eine Elektrokupplung 18 beispielsweise in Form einer Steckdose oder eines anderen Stromanschlusses vorgesehen sein, mittels derer das elektrische Antriebssystem 20 an eine Stromversorgung angeschlossen werden kann, insbesondere an eine elektrische Energieversorgung des Trägergeräts.

Wie Fig. 3 zeigt, kann die genannte zumindest eine Pumpe 16 mit einem Tank 19 verbunden bzw. über eine Ventilanordnung verbindbar sein, um ein geeignetes Medium, insbesondere Hydrauliköl ansaugen und/oder Druckmedium aus den Stellaktoren 8 oder 12 zurückströmen lassen zu können.

Wie Fig. 3 weiter zeigt, kann die genannte Pumpe 16 Druckmittel bereitstellen, mittels dessen dann der Stellaktor 12 und/oder der Stellaktor 8 des Verriegelungselements 11 bzw. des Sicherungselements 7 betätigt werden kann. Grundsätzlich können beide Stellaktoren 8 und 12 von derselben Pumpe 16 her mit Druckfluid beaufschlagt werden, wobei hier geeignete Ventile, insbesondere Schalt- und/oder Sperrventile vorgesehen sein können, um die Betätigung der Stellaktoren 8 und 12 zeitlich voneinander beabstanden zu können. Eine solche Ventilanordnung zur Steuerung der Druckbeaufschlagung des zumindest einen Stellaktors 8 bzw. 12 von der Pumpe 16 her kann vorteilhafterweise elektrisch angesteuert werden, wofür ein Steuerungsanschluss am Schnellkuppler 1 vorgesehen sein kann, um Steuerbefehle vom Führerstand des Trägergeräts her an den Schnellkuppler 1 geben zu können. Grundsätzlich wäre es aber auch möglich, eine Ventilanordnung vorzusehen, die druckabhängig arbeitet, sodass alleine durch die Ansteuerung der Pumpe 16 eine zeitversetzte Betätigung der Stellaktoren 8 und 12 möglich ist. Hierzu kann beispielsweise die Pumpe 16 verschiedene Druckniveaus bereitstellen, in Abhängigkeit derer dann der eine und/oder der andere Stellaktor 8 bzw. 12 beaufschlagt wird.

Erfindungsgemäß ist jedem der Stellaktoren 8 und 12 für das Sicherungselement 7 bzw. das Verriegelungselement 11 eine eigene Pumpe 16 zugeordnet, sodass durch einfach elektrische Ansteuerung der jeweiligen Pumpe wahlweise das Sicherungselement 7 oder das Verriegelungselement 11 betätigt werden kann.

## Patentansprüche

1. Schnellkuppler zum Ankuppeln eines Werkzeugs (4) an einen Baggerstiel (5) oder dergleichen, mit einer Ankuppelaufnahme (6) zur Aufnahme eines ersten Verriegelungsteils (13) und einer Verriegelungsaufnahme (10) zum Aufnehmen eines zweiten Verriegelungsteils (14), wobei der Ankuppelaufnahme (6) ein Sicherungselement (7) zum Fangen und/oder Sichern des ersten Verriegelungsteils (13) in der Ankuppelaufnahme (6) zugeordnet und der Verriegelungsaufnahme (10) ein Verriegelungselement (11) zum Verriegeln des zweiten Verriegelungsteils (14) in der Verriegelungsaufnahme (10) zugeordnet ist, wobei das Sicherungselement (7) von einem Stellaktor (8) betätigbar ist und das genannte Verriegelungselement (11) durch einen weiteren Stellaktor (12) betätigbar ist, wobei der Schnellkuppler (1) elektrisch ansteuerbar und betätigbar ist und einen elektrischen Antrieb (15) mit einer Pumpe (16) zum Betätigen des Stellaktors (12) des Verriegelungselements (11) aufweist, **dadurch gekennzeichnet, dass** der Stellaktor (8) des Sicherungselements (7) von einem weiteren elektrischen Antrieb mit einer weiteren Pumpe betätigbar ist, und die elektrischen Antriebe (15) derart ausgebildet sind, dass das Verriegelungselement (11) und das Sicherungselement (7) unabhängig voneinander und zeitversetzt zueinander betätigbar sind.

2. Schnellkuppler nach dem vorhergehenden Anspruch, wobei an dem Schnellkuppler (1) ein Tank (19) vorgesehen ist, der mit den Pumpen (16) strömungsverbunden oder durch eine Ventilanordnung strömungsverbindbar ist.

3. Schnellkuppler nach einem der beiden vorhergehenden Ansprüche, wobei der Stellaktor (12) des Verriegelungselements als doppelt wirkender Druckmittelzylinder ausgebildet ist und die Pumpe (16) mit beiden Druckkammern des Druckmittelzylinders verbunden oder über eine Ventilanordnung verbindbar ist.

4. Schnellkuppler nach einem der vorhergehenden Ansprüche, wobei der Schnellkuppler (1) als Energieanschluss ausschließlich einen Stromanschluss aufweist.

5. Schnellkuppler nach einem der vorhergehenden Ansprüche, wobei die elektrischen Antriebe (15) einschließlich der Pumpen (16) und eines ggfs. vorhandenen Tanks (19) eine vormontierte Baugruppe bilden, die Befestigungsmittel zum nachträglichen Anbringen an einem Schnellkupplerkorpus und Nachrüsten eines Schnellkupplers aufweist.

6. Schnellkuppler nach einem der Ansprüche 1 bis 4, wobei der elektrische Antrieb (15), insbesondere dessen Pumpe (16) und ein ggfs. vorhandener Tank (19), in einen Schnellkupplergrundkorpus integriert ist und/oder fester Bestandteil des Schnellkupplers (1) ist.

## Claims

1. Quick coupler for coupling a tool (4) to an excavator arm (5) or the like, comprising a coupling mount (6) for receiving a first locking part (13) and a locking mount (10) for receiving a second locking part (14), wherein a securing element (7) for catching and/or securing the first locking part (13) in the coupling mount (6) is associated with the coupling mount (6), and a locking element (11) for locking the second locking part (14) in the locking mount (10) is associated with the locking mount (10), wherein the securing element (7) is actuable by an adjustment actuator (8) and the named locking element (11) is actuable by a further adjustment actuator (12), wherein the quick coupler (1) is electrically controllable and actuable and has an electric drive (15) with a pump (16) for actuating the adjustment actuator (12) of the locking element (11), **characterized in that** the adjustment actuator (8) of the securing element (7) is actuable by a further electric drive with a further pump, and the electric drives (15) are configured such that the locking element (11) and the securing element (7) can be actuated independently of one another and in a manner offset in time from one another.

2. Quick coupler in accordance with the preceding claim, wherein a tank (19) that is in flow connection with the pumps (16) or is connectable flow-wise by a valve arrangement, is provided at the quick coupler (1).

3. Quick coupler in accordance with one of the two preceding claims, wherein the adjustment actuator (12) of the locking element is configured as a dual action pressure medium cylinder and the pump (16) is connected or is connectable via a valve arrangement to both pressure chambers of the pressure medium cylinder.

4. Quick coupler in accordance with one of the preceding claims, wherein the quick coupler (1) has only one power connector as the energy connector.

5. Quick coupler in accordance with one of the preceding claims, wherein the electric drives (15), including the pumps (16) and an optionally present tank (19), form a pre-assembled assembly that comprises fastening means for a retroactive attachment to a quick coupler body and for retrofitting a quick coupler.

6. Quick coupler in accordance with one of the claims 1 to 4, wherein the electric drive (15), in particular its pump (16) and an optionally present tank (19), is integrated into a quick coupler base body and/or is a fixed component of the quick coupler (1).

## Revendications

1. Raccord rapide servant à accoupler un outil (4) à un manche d'excavateur (5) ou similaire, avec un logement d'accouplement (6) servant à loger une première partie de verrouillage (13) et un logement de verrouillage (10) servant à loger une deuxième partie de verrouillage (14), dans lequel un élément de blocage (7) servant à intercepter et/ou à bloquer la première partie de verrouillage (13) dans le logement d'accouplement (6) est associé au logement d'accouplement (6) et un élément de verrouillage (11) servant à verrouiller la deuxième partie de verrouillage (14) dans le logement de verrouillage (10) est associé au logement de verrouillage (10), dans lequel l'élément de blocage (7) peut être actionné par un actionneur de réglage (8) et ledit élément de verrouillage (11) peut être actionné par un autre actionneur de réglage (12), dans lequel le raccord rapide (1) peut être piloté et actionné de manière électrique et présente un entraînement (15) électrique avec une pompe (16) servant à actionner l'actionneur de réglage (12) de l'élément de verrouillage (11), **caractérisé en ce que** l'actionneur de réglage (8) de l'élément de blocage (7) peut être actionné par un autre entraînement électrique avec une autre pompe, et les entraînements (15) électriques sont réalisés de telle manière que l'élément de verrouillage (11) et l'élément de blocage (7) peuvent être actionnés indépendamment l'un de l'autre et avec un décalage dans le temps l'un par rapport à l'autre.

2. Raccord rapide selon la revendication précédente, dans lequel est prévu au niveau du raccord rapide (1) un réservoir (19), qui est en communication fluidique ou peut être placé en communication fluidique par un ensemble de soupape avec les pompes (16).

3. Raccord rapide selon l'une quelconque des deux revendications précédentes, dans lequel l'actionneur de réglage (12) de l'élément de verrouillage est réalisé en tant que cylindre à moyen sous pression à double action et la pompe (16) est reliée ou peut être reliée par l'intermédiaire d'un ensemble de soupape aux deux chambres sous pression du cylindre à moyen sous pression.

4. Raccord rapide selon l'une quelconque des revendications précédentes, dans lequel le raccord rapide (1) présente en tant que connexion d'énergie exclusivement une connexion électrique.

5. Raccord rapide selon l'une quelconque des revendications précédentes, dans lequel les entraînements (15) électriques y compris les pompes (16) et un réservoir (19) éventuellement présent forment un module prémonté, qui présente des moyens de fixation destinés à être installés ultérieurement au niveau d'un corps de raccord rapide et servant à équiper ultérieurement un raccord rapide.

6. Raccord rapide selon l'une quelconque des revendications 1 à 4, dans lequel l'entraînement (15) électrique, en particulier sa pompe (16) et un réservoir (19) éventuellement présent, est intégré dans un corps de base de raccord rapide et/ou est un élément constitutif solidaire du raccord rapide (1).
